# EUROPÄISCHE PATENTSCHRIFT

(11) **EP 2 339 202 B1**
(45) Veröffentlichungstag und Bekanntmachung des Hinweises auf die Patenterteilung: **15.02.2012**
(21) Anmeldenummer: 09016013.6
(22) Anmeldetag: 24.12.2009
(51) Int. Cl.: F16F 7/14

(54) **Dämpfungs- und Federanordnung und Verfahren zu ihrer Herstellung**
Dampening and spring arrangement and method for its production
Agencement d'amortissement et de ressort et son procédé de fabrication

(43) Veröffentlichungstag der Anmeldung: 29.06.2011
(73) Patentinhaber: Sebert Schwingungstechnik GmbH, 73230 Kirchheim/Teck (DE)
(72) Erfinder: Sebert, Karl, 73230 Kirchheim/Teck (DE)
(74) Vertreter: Kocher, Mark Werner

(56) Entgegenhaltungen:
- EP-A1- 0 358 146
- EP-A1- 1 122 458
- WO-A1-88/08933
- DE-A1- 10 320 737
- FR-A1- 2 624 233
- GB-A- 2 052 328
- US-A- 3 037 728

## Beschreibung

Die Erfindung betrifft eine Dämpfungs- und Federanordnung mit zwei Endstücken, die über eine steifelastische Draht- oder Seilanordnung miteinander verbunden sind und die als metallische langgestreckte Leistenelemente ausgebildet sind, wobei die Draht- und Seilanordnung aus wenigstens einem wendelartig ausgebildeten Draht- oder Seilstück besteht, sowie ein Verfahren zur Herstellung dieser Dämpfungs- und Federanordnung.

Aus der EP 1 122 458 A1 ist eine derartige Dämpfungs- und Federanordnung bekannt, wobei die beiden Endstücke quer zur Längsrichtung verlaufende Durchgangsbohrungen besitzen, durch die das wendelartig ausgebildete Draht- oder Seilstück verläuft. Hierzu muss der Draht oder das Seil jedoch in aufwendiger und kaum automatisierbarer Weise durch die Durchgangsbohrungen nacheinander geführt werden, um die Drahtwendel zu erzeugen. Zum Fixieren der Windungen in den Durchgangsbohrungen ist für jede Durchgangsbohrung eine Querbohrung erforderlich, durch die ein Klemmstück eingepresst werden muss. Trotz großem Aufwand wird hierbei nur eine punktförmige Fixierung erreicht.

Eine Aufgabe der vorliegenden Erfindung besteht darin, eine Dämpfungs- und Federanordnung sowie ein Verfahren zur Herstellung dieser Dämpfungs- und Federanordnung zu schaffen, das bei geringem Herstellungsaufwand leicht automatisierbar ist und eine schnelle und einfache Herstellung ermöglicht.

Diese Aufgabe wird erfindungsgemäß durch eine Dämpfungs- und Federanordnung mit den Merkmalen des Anspruchs 1 gelöst.

Die Vorteile des erfindungsgemäßen Dämpfungs- und Federanordnung bestehen insbesondere darin, dass zur Herstellung des wendelartig ausgebildeten Draht- oder Seilstücks ein Draht oder ein Seil in einfacher Weise mittels einer einfachen Wickelmaschine so um die beiden Endstücke gewickelt wird, dass die Windungen jeweils durch die Nuten verlaufen. Dies kann schnell und einfach mittels eines automatisierten Herstellungsprozesses realisiert werden. Anschließend müssen dann lediglich noch die Nutseitenbereiche so verformt bzw. verpresst werden, dass die Windungen in den Nuten fixiert werden. Dies kann nacheinander oder in einem einzigen Pressvorgang erfolgen, der ebenfalls in einfacher Weise automatisierbar ist. Zusätzliche Fixierteile sind hierzu nicht erforderlich.

Durch die in den Unteransprüchen aufgeführten Maßnahmen sind vorteilhafte Weiterbildungen und Verbesserungen der im Anspruch 1 angegebenen Dämpfungs- und Federanordnung möglich.

Eine besonders gute und sichere Fixierung wird dadurch erreicht, dass jeweils beide Nutseitenbereiche einer Nut gegeneinander durch Pressung und unter Einschluss des durchlaufenden Draht- oder Seilstückbereichs verformt sind.

Zur Fixierung während des Herstellungsprozesses und/oder zur späteren Fixierung der beiden Endstücke zwischen zu dämpfenden bzw. federnden Massen sind die Endstücke zweckmäßigerweise mit Montage- und/oder Haltelöchern versehen.

Die Nutbreite der Nuten entspricht zweckmäßigerweise dem Durchmesser des Draht- oder Seilstücks oder ist lediglich geringfügig größer, um die Fixierung durch Verpressen zu erleichtern.

Die Endstücke bestehen bevorzugt aus Aluminium, einer Aluminiumlegierung oder aus Edelstahl.

Als Draht- oder Seilstück eignet sich vor allem ein Drahtseilstück oder eine Stahldrahtlitze.

Ein bevorzugtes Verfahren zur Herstellung einer solcher Dämpfungs- und Federanordnung besteht darin, dass die beiden mit den Nuten versehenen Endstücke zunächst zu beiden Seiten eines Montagedorns fixiert werden. Anschließend wird ein Draht- oder Seil mittels einer Wickelvorrichtung um die Endstücke herum so gewickelt, dass die Windungen jeweils durch die Nuten verlaufen. Mittels eines Verpressvorgangs werden dann schließlich die Nutseitenbereiche einzeln oder gemeinsam unter Fixierung der Windungen des Drahtes oder des Seils verformt.

Um bei der Herstellung der Dämpfungs- und Federanordnung ein Draht oder ein Seil verwenden zu können, das ohne spezifische Längenabmessung beispielsweise auf einer Vorratsrolle aufgewickelt ist, wird ein Ende des Drahts oder des Seils vor dem Wickeln festgehalten und der Draht oder das Seil wird nach dem Fixieren in den Nuten unter Bildung des Draht- oder Seilstücks abgeschnitten. Anschließend kann ein weiteres Draht- oder Seilstück an denselben Endstücken angebracht werden oder an neuen Endstücken.

Nach der Montage bzw. nach dem Anbringen des Draht- oder Seilstücks wird der Montagedorn wieder entfernt.

Um symmetrische Dämpfungs- und Federeigenschaften zu erzielen, ist eine gerade Zahl von Draht- oder Seilstücken, insbesondere sind zwei Draht- oder Seilstücke mit entgegengesetztem Wicklungssinn an den beiden Endstücken fixiert. Diese können gleichzeitig oder nacheinander gewickelt werden.

Ein Ausführungsbeispiel der Erfindung ist in der Zeichnung dargestellt und in der nachfolgenden Beschreibung näher erläutert. Es zeigt:
- Figur 1: eine perspektivische Darstellung einer Dämpfungs- und Federanordnung als Ausführungsbeispiel der Er- findung,
- Figur 2: eine perspektivische Darstellung eines der beiden Endstücke vor dem Anbringen der Draht- oder Seilan- ordnung
- Figur 3: eine Seitenansicht der in Figur 1 dargestellten Dämpfungs- und Federanordnung und
- Figur 4: eine vergrößerte Darstellung einer in einer der Nu- ten fixierten Windung der Draht- oder Seilanord- nung.

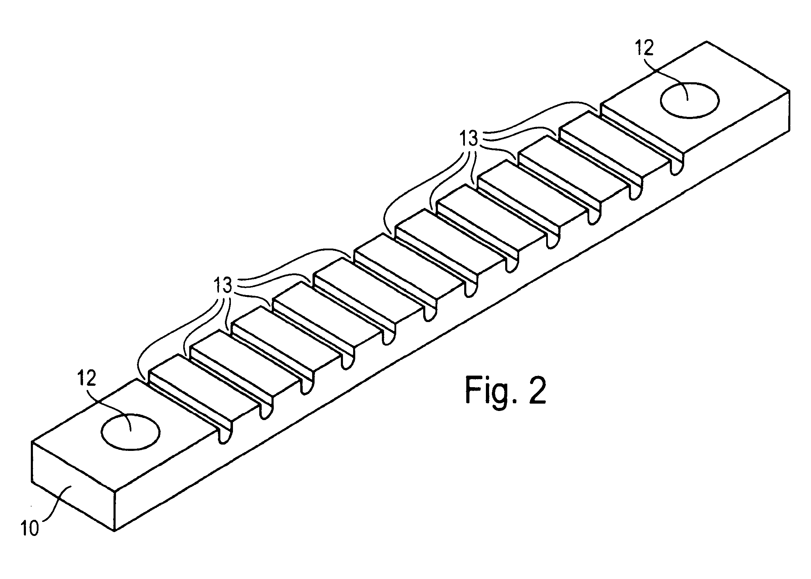

Die als Ausführungsbeispiel in den Figuren dargestellte Dämpfungs- und Federanordnung besteht aus zwei im wesentlichen parallelen, voneinander beabstandeten Endstücken 10, 11, die als langgestreckte metallische Flachleistenelemente ausgebildet sind, von denen eines in Figur 2 separat dargestellt ist. Diese Endstücke können auch eine von der Flachleistenform abweichende Gestalt besitzen und beispielsweise einen quadratischen, ovalen, halbkreisförmigen oder ähnlichen Querschnitt besitzen. Sie bestehen aus einem verformbaren Metall, beispielsweise aus Aluminium, einer Aluminiumlegierung oder aus Edelstahl. Zur Fixierung dieser Endstücke 10, 11 während des Herstellungsprozesses oder später zur Fixierung zwischen zu dämpfenden oder abzufedernden Gegenständen sind Durchgangsbohrungen 12 vorgesehen, die im Ausführungsbeispiel an den Endbereichen der Endstücke 10, 11 angebracht sind. Je nach Erfordernis können sie jedoch auch andere Positionen einnehmen oder beispielsweise auch als Gewindebohrungen ausgebildet sein.

Die Endstücke 10, 12 besitzen an einer Flachseite eine Vielzahl von quer zur Längsrichtung verlaufenden parallelen Nuten 13. Diese Nuten sind äquidistant angeordnet, jedoch sind voneinander abweichende Abstände und von der exakten Querrichtung abweichende Richtungen möglich, was nicht zuletzt von der Gestalt der aufzubringenden Draht- oder Seilanordnung 14 abhängt.

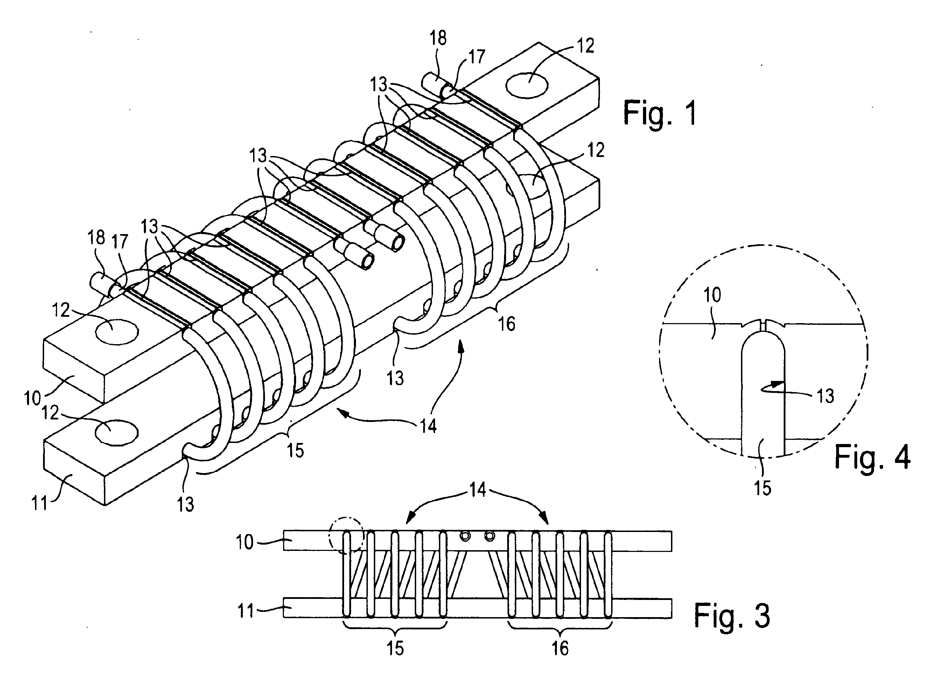

Zur Herstellung dieser Dämpfungs- und Federanordnung werden zunächst die beiden Endstücke 10, 11 so zu beiden Seiten eines Montagedorns fixiert, dass die an den Flachseiten der Endstücke 10, 11 offenen Nutseiten in entgegengesetzte Richtungen weisen. Nun werden zwei wendelartig ausgebildete Draht- oder Seilstücke 15 oder 16 mit entgegengesetztem Wicklungssinn zur Bildung der Draht- oder Seilanordnung 14 an den beiden Endstücken 10, 11 angebracht. Dies erfolgt dadurch, dass ein Draht oder ein Seil so um die beiden Endstücke 10, 11 unter Zugbelastung herumgewickelt wird, dass die Windungen jeweils abwechselnd durch eine Nut 13 im einen Endstück 10 und dann durch eine Nut 13 im anderen Endstück 11 verlaufen. Der Draht- bzw. Seilanfang wird dabei fixiert, um eine straffe Wicklung zu ermöglichen. Nach dem Einlegen des Drahtes oder des Seils in die letzte Nut 13 werden die Nutseitenbereiche jeder Nut so verformt bzw. verpresst, dass der Draht oder das Seil in der Nut 13 fixiert wird. Dies ist im vergrößerten Ausschnitt gemäß Figur 4 dargestellt. Dabei werden jeweils beide Nutseitenbereiche einer Nut gegeneinander unter Einschluss des durchlaufenden Drahts oder Seils verpresst oder verformt. Die Verformung erstreckt sich über die gesamte Nutlänge, so dass eine besonders gute und sichere Fixierung erreicht wird. Prinzipiell wäre es auch möglich, nur punktuell zu verformen oder zu verpressen, wobei jedoch auch dann sinnvoller Weise mehrere solcher punktförmigen Verformungen vorgenommen werden. Nach dem Fixieren des Draht- oder Seilstücks 15 bzw. 16 in der beschriebenen Weise an den beiden Endstücken 10, 11 werden die beiden überstehenden Seilenden abgeschnitten, wobei ein noch verbleibender überstehender Bereich 17, falls vorhanden, mit einer Abdeckung 18 versehen wird, um Verletzungen zu vermeiden und im Falle der Ausbildung des Draht- oder Seilstücks als Drahtseilstück oder Stahldrahtlitze die Enden zu sichern.

Die beiden gegensinnig gewickelten Draht- oder Seilstücke 15, 16 können gleichzeitig oder nacheinander gewickelt oder fixiert werden. Auch die Verformung und Verpressung der Nutseitenbereiche kann nacheinander oder gemeinsam durch ein entsprechendes Werkzeug erfolgen. Nach der Fertigstellung wird der Montagedorn herausgezogen bzw. entfernt, was gleichzeitig das Ende des Herstellungsverfahrens darstellt.

In einer einfacheren Version kann selbstverständlich auch nur ein einziges Draht- oder Seilstück 15 bzw. 16 gewickelt werden. Weiterhin ist es möglich, den Wicklungsvorgang so durchzuführen, dass eine einzige Wicklung zwei gegensinnige Bereiche aufweist. Dies kann gemäß dem eingangs angegebenen Stand der Technik dadurch erfolgen, dass die beiden inneren Wicklungsenden miteinander verbunden sind.

Es ist weiterhin auch möglich, eine noch größere Anzahl von Draht- und Seilstücken 15, 16 aufzubringen, wobei die Zahl eine gerade Zahl sein sollte.

Um eine Beschädigung des Drahtes oder Seils durch scharfe Kanten an den Nutenden zu verhindern, können die Nuten an ihren entgegengesetzten Enden abgerundet oder im Querschnitt vergrößert werden. Im Übrigen entspricht die Nutbreite im Wesentlichen dem Durchmesser des Drahtes oder des Seils oder ist nur geringfügig größer.

## Patentansprüche

1. Dämpfungs- und Federanordnung mit zwei Endstücken (10, 11), die über eine steifelastische Draht- oder Seilanordnung (14) miteinander verbunden sind und die als metallische, langgestreckte Leistenelemente ausgebildet sind, wobei die Draht- und Seilanordnung (14) aus wenigstens einem wendelartig ausgebildeten Draht- oder Seilstück (15, 16) besteht, **dadurch gekennzeichnet, dass** die Endstücke (10, 11) jeweils an ihren voneinander abgewandten Seiten mit einer Vielzahl quer zur Längsrichtung verlaufenden Nuten (13) versehen sind, wobei das wenigstens eine Draht- oder Seilstück (15, 16) abwechselnd jeweils durch eine Nut (13) des einen Endstücks (10) und dann durch eine Nut (13) des anderen Endstücks (11) verläuft und in den Nuten (13) durch verformte oder verpresste Nutseitenbereiche fixiert ist.

2. Dämpfungs- und Federanordnung nach Anspruch 1, **dadurch gekennzeichnet, dass** jeweils beide Nutseitenbereiche einer Nut (13) gegeneinander durch Pressung und unter Einschluss des durchlaufenden Draht- oder Seilstückbereichs verformt sind.

3. Dämpfungs- und Federanordnung nach Anspruch 1 oder 2, **dadurch gekennzeichnet, dass** die Endstücke (10, 11) mit Montage- und/oder Haltelöchern (12) versehen sind.

4. Dämpfungs- und Federanordnung nach einem der vorhergehenden Ansprüche, **dadurch gekennzeichnet, dass** die Nutbreite der Nuten (13) dem Durchmesser des Drahtes oder Seils des wenigstens einem Draht- oder Seilstücks (15, 16) entspricht oder geringfügig größer ist.

5. Dämpfungs- und Federanordnung nach einem der vorhergehenden Ansprüche, **dadurch gekennzeichnet, dass** die Endstücke (10, 11) aus Aluminium, aus einer Aluminiumlegierung oder aus Edelstahl bestehen.

6. Dämpfungs- und Federanordnung nach einem der vorhergehenden Ansprüche, **dadurch gekennzeichnet, dass** das wenigstens eine Draht- oder Seilstück (15, 16) als Drahtseilstück oder Stahldrahtlitze ausgebildet ist.

7. Dämpfungs- und Federanordnung nach einem der vorhergehenden Ansprüche, **dadurch gekennzeichnet, dass** eine gerade Anzahl von Draht- oder Seilstücken (15, 16), insbesondere zwei Draht- oder Seilstücke (15, 16), mit entgegengesetztem Wicklungssinn an den beiden Endstücken (10, 11) fixiert ist.

8. Verfahren zur Herstellung einer Dämpfungs- und Federanordnung nach einem der vorhergehenden Ansprüche, **dadurch gekennzeichnet, dass** die beiden mit den Nuten (13) versehenen Endstücke (10, 11) zu beiden Seiten eines Montagedorns fixiert werden, dass ein Draht oder Seil mittels einer Wickelvorrichtung um die Endstücke (10, 11) herum so gewickelt wird, dass die Windungen jeweils durch die Nuten (13) verlaufen, und dass mittels einer Verpressvorrichtung die Nutseitenbereiche einzeln oder gemeinsam unter Fixierung der Windungen des Draht- oder Seilstücks (15, 16) verformt werden.

9. Verfahren nach Anspruch 8, **dadurch gekennzeichnet, dass** ein Ende des Drahts oder Seils des wenigstens einen Draht- oder Seilstücks (15, 16) vor dem Wickeln festgehalten wird und dass der Draht oder das Seil nach dem Fixieren in den Nuten (13) unter Bildung des Draht- oder Seilstücks (15, 16) abgeschnitten wird.

10. Verfahren nach Anspruch 8 oder 9, **dadurch gekennzeichnet, dass** nacheinander oder gleichzeitig mehrere Draht- oder Seilstücke (15, 16) an den Endstücken (10, 11) gewickelt und fixiert werden.

11. Verfahren nach einem der Ansprüche 8 bis 10, **dadurch gekennzeichnet, dass** der Montagedorn nach dem Fixieren des wenigstens einen Draht- oder Seilstücks (15, 16) entfernt wird.

## Claims

1. Damping and spring assembly with two end pieces (10, 11), connected to one another via a stiff elastic wire or cable arrangement (14) and in the form of elongated, metal strip elements, wherein the wire or cable arrangement (14) is comprised of at least one coil-like wire or cable element (15, 16), **characterised in that** each of the end pieces (10, 11) is provided on their sides which face away from one another with a multiplicity of slots (13) running at right-angles to the axial direction, wherein at least one wire or cable element (15, 16) runs alternately through a slot (13) of the one end piece (10) and then through a slot (13) of the other end piece (11), and is fixed in the slots (13) by deformed or pressed slot side areas.

2. Damping and spring assembly according to claim 1, **characterised in that** in each case both slot side areas of a slot (13) are deformed towards one another by pressing, with inclusion of the wire or cable element area running through them.

3. Damping and spring assembly according to claim 1 or 2, **characterised in that** the end pieces (10, 11) are provided with mounting and/or retaining holes (12).

4. Damping and spring assembly according to any of the preceding claims, **characterised in that** the slot width of the slots (13) corresponds to or is slightly greater than the diameter of the wire or cable of the wire or cable element or elements (15, 16).

5. Damping and spring assembly according to any of the preceding claims, **characterised in that** the end pieces (10, 11) are made of aluminium, an aluminium alloy or stainless steel.

6. Damping and spring assembly according to any of the preceding claims, **characterised in that** the wire or cable element or elements (15, 16) is or are in the form of a wire rope element or a steel wire strand.

7. Damping and spring assembly according to any of the preceding claims, **characterised in that** an even number of wire or cable elements (15, 16), in particular two wire or cable elements (15, 16), is fixed to the two end pieces (10, 11) with opposite directions of winding.

8. Method of producing a damping and spring assembly according to any of the preceding claims, **characterised in that** the two end pieces (10, 11) provided with the slots (13) are located on either side of an assembly plug, that a wire or cable is wound around the end pieces (10, 11) by a winding device in such a way that the windings run in each case through the slots (13), and that by means of a pressing device the slot side areas are individually or jointly deformed to fix the windings of the wire or cable element (15, 16).

9. Method according to claim 8, **characterised in that** one end of the wire or cable of the wire or cable element or elements (15, 16) is held fast before winding, and that after fixing in the slots (13) the wire or cable is cut off to form the wire or cable element (15, 16).

10. Method according to claim 8 or 9, **characterised in that** several wire or cable elements (15, 16) are wound and fixed to the end pieces (10, 11) consecutively or simultaneously.

11. Method according to any of claims 8 to 10, **characterised in that** the assembly plug is removed after fixing of the wire or cable element or elements (15, 16).

## Revendications

1. Agencement d'amortissement et de ressort, comportant deux pièces terminales (10, 11) reliées entre elles par l'intermédiaire d'un agencement de câble ou de fil métallique (14) semi-élastique et réalisées sous forme de barres métalliques oblongues, l'agencement de câble ou de fil métallique (14) étant constitué d'au moins un tronçon de câble ou de fil métallique (15, 16) réalisé en hélice, **caractérisé en ce que** les pièces terminales (10, 11) sont respectivement pourvues, sur leurs côtés mutuellement opposés, d'une pluralité de rainures (13) s'étendant transversalement à la direction longitudinale, le tronçon de câble ou de fil métallique (15, 16) s'étendant chaque fois alternativement dans une rainure (13) de l'une (10) des pièces terminales puis dans une rainure (13) de l'autre pièce terminale (11) et étant immobilisé dans les rainures (13) par des zones latérales de rainure déformées ou comprimées.

2. Agencement d'amortissement et de ressort selon la revendication 1, **caractérisé en ce que** les deux zones latérales de rainure de chaque rainure (13) sont déformées l'une contre l'autre par pression et avec incorporation de la zone du tronçon de câble ou de fil métallique passant dans la rainure.

3. Agencement d'amortissement et de ressort selon la revendication 1 ou 2, **caractérisé en ce que** les pièces terminales (10, 11) sont pourvues d'orifices de montage et/ou de fixation (12).

4. Agencement d'amortissement et de ressort selon l'une quelconque des revendications précédentes, **caractérisé en ce que** la largeur de rainure des rainures (13) est égale ou légèrement supérieure au diamètre du câble ou fil métallique du tronçon de câble ou de fil métallique (15, 16).

5. Agencement d'amortissement et de ressort selon l'une quelconque des revendications précédentes, **caractérisé en ce que** les pièces terminales (10, 11) sont constituées d'aluminium, d'un alliage d'aluminium ou d'acier spécial.

6. Agencement d'amortissement et de ressort selon l'une quelconque des revendications précédentes, **caractérisé en ce que** le tronçon de câble ou de fil métallique (15, 16) est réalisé sous forme de tronçon de câble en fils d'acier ou de toron de fils d'acier.

7. Agencement d'amortissement et de ressort selon l'une quelconque des revendications précédentes, **caractérisé en ce qu'**un nombre pair de tronçons de câble ou de fil métallique (15, 16), en particulier deux tronçons de câble ou de fil métallique (15, 16), sont fixés avec des sens d'enroulement opposés sur les deux pièces terminales (10, 11).

8. Procédé de fabrication d'un agencement d'amortissement et de ressort selon l'une quelconque des revendications précédentes, **caractérisé en ce que** les deux pièces terminales (10, 11) pourvues des rainures (13) sont fixées de part et d'autre d'un mandrin de montage, **en ce qu'**un câble ou fil métallique est enroulé au moyen d'un dispositif d'enroulement autour des pièces terminales (10, 11), **en ce que** les spires s'étendent respectivement dans les rainures (13) et **en ce qu'**au moyen d'un dispositif de compression, les zones latérales des rainures sont individuellement ou conjointement déformées, immobilisant ainsi les spires du tronçon de câble ou de fil métallique (15, 16).

9. Procédé selon la revendication 8, **caractérisé en ce qu'**une extrémité du câble ou fil métallique du tronçon de câble ou de fil métallique (15, 16) est maintenue bloquée avant l'enroulement et **en ce que** le câble ou fil métallique est découpé à la suite de l'immobilisation dans les rainures (13), formant ainsi le tronçon de câble ou de fil métallique (15, 16).

10. Procédé selon la revendication 8 ou 9, **caractérisé en ce qu'**on enroule et immobilise successivement ou simultanément plusieurs tronçons de câble ou de fil métallique (15, 16) sur les pièces terminales (10, 11).

11. Procédé selon l'une quelconque des revendications 8 à 10, **caractérisé en ce que** le mandrin de montage est retiré à la suite de l'immobilisation du tronçon de câble ou de fil métallique (15, 16).
